# EUROPÄISCHE PATENTSCHRIFT

(11) **EP 1 413 745 B1**
(45) Veröffentlichungstag und Bekanntmachung des Hinweises auf die Patenterteilung: **22.02.2012**
(21) Anmeldenummer: 02102472.4
(22) Anmeldetag: 22.10.2002
(51) Int. Cl.: F02M 61/18, F02M 69/04, F02B 23/10

(54) **Kraftstoffinjektor und Brennkraftmaschine mit Direkteinspritzung**
Fuel injector and a direct injected combustion engine
Injecteur de carburant et moteur à combustion interne à injection directe

(43) Veröffentlichungstag der Anmeldung: 28.04.2004
(73) Patentinhaber: Ford Global Technologies, LLC, Dearborn, MI 48126 (US)
(72) Erfinder: Kramer, Ulrich, 51427, Bergisch Gladbach (DE); Zimmermann, Diana, 51107, Koeln (DE); Walder, Karl, 51688, Wipperfuerth (DE); Wirth, Martin, 42853, Remscheid (DE)
(74) Vertreter: Drömer, Hans-Carsten

(56) Entgegenhaltungen:
- DE-A- 3 114 386
- US-A- 5 540 200
- US-A- 5 586 726
- PATENT ABSTRACTS OF JAPAN vol. 1999, no. 08, 30. Juni 1999 (1999-06-30) & JP 11 082243 A (TOYOTA MOTOR CORP), 26. März 1999 (1999-03-26)
- PATENT ABSTRACTS OF JAPAN vol. 2000, no. 08, 6. Oktober 2000 (2000-10-06) & JP 2000 130287 A (MITSUBISHI ELECTRIC CORP), 9. Mai 2000 (2000-05-09)
- PATENT ABSTRACTS OF JAPAN vol. 1996, no. 10, 31. Oktober 1996 (1996-10-31) & JP 08 144762 A (NISSAN MOTOR CO LTD), 4. Juni 1996 (1996-06-04)
- PATENT ABSTRACTS OF JAPAN vol. 1996, no. 11, 29. November 1996 (1996-11-29) & JP 08 177499 A (NISSAN MOTOR CO LTD), 9. Juli 1996 (1996-07-09)

## Beschreibung

Die Erfindung betrifft einen Kraftstoffinjektor für die Direkteinspritzung von Kraftstoff in die Brennkammer einer Brennkraftmaschine, enthaltend mindestens zwei Austrittskanäle für Kraftstoff. Ferner betrifft die Erfindung eine Brennkraftmaschine mit Direkteinspritzung, enthaltend eine Brennkammer, in welcher eine Zündeinrichtung und ein Kraftstoffinjektor mit mindestens zwei Austrittskanälen für Kraftstoff angeordnet sind. Schließlich betrifft die Erfindung ein Verfahren zur Direkteinspritzung von Kraftstoff in die Brennkammern einer Brennkraftmaschine, bei dem Kraftstoffstrahlen auf eine Zündeinrichtung gerichtet werden.

Bei fremdgezündeten Brennkraftmaschinen (Ottomotoren) findet die Direkteinspritzung von Kraftstoff in die Brennkammern beziehungsweise Zylinder aufgrund der damit verbundenen positiven Eigenschaften zunehmende Verbreitung. Zur Verteilung des eingespritzten Kraftstoffes in der Brennkammer sind verschiedene Verfahren wie z. B. die "wandgeführte" und die "Luftstrahl-geführte" Direkteinspritzung bekannt. Ein besonders hohes Kraftstoff-Ausnutzungspotential hat jedoch die sog. "strahlgeführte" Direkteinspritzung, bei welcher der Weg des Kraftstoffes in der Brennkammer nicht durch deren Wände oder einen begleitenden Luftstrahl, sondern durch den Bewegungsimpuls des Kraftstoffes nach dem Verlassen der Einspritzdüse geprägt wird. Problematisch an der strahlgeleiteten Direkteinspritzung ist indes, daß der Kraftstoffstrahl direkt in Richtung der Zündkerze gelenkt werden muß, um eine Zündung des Kraftstoff-Luft-Gemisches sicherzustellen. Dies führt zum Absetzen von flüssigem Kraftstoff an der Zündkerze und dadurch zu Ablagerungen an den Elektroden, welche die nachfolgende Zündung stören oder sogar unmöglich machen.

Diesbezüglich sind Kraftstoffinjektoren mit mehreren Austrittskanälen vorgeschlagen worden, bei denen alle Austrittskanäle ihre Kraftstoffstrahlen in die Nähe der Zündkerze lenken, nicht jedoch direkt auf die Elektroden. Auf diese Weise kann eine Kraftstoffwolke ohne Benetzung der Elektrode erzeugt werden. Nachteilig bei diesen Injektoren ist jedoch, daß sich die zahlreichen Austrittsöffnungen verhältnismäßig schnell mit Kohlenstoffablagerungen zusetzen, so daß diese bereits nach einer kurzen Betriebszeit des Motors nicht mehr ordnungsgemäß funktionieren. Diese Probleme können durch eine Verminderung der Anzahl der Austrittsöffnungen im Kraftstoffinjektor auf typischerweise fünf bis sieben Stück mit entsprechend größerem Durchmesser vermindert werden, jedoch beeinträchtigt dies wiederum die gewünschte Erzeugung eines Kraftstoffnebels in der Nähe der Elektrode.

Aus der US 5 540 200 ist eine Brennkraftmaschine gemäß dem Oberbegriff des Anspruches 2 bekannt mit Direkteinspritzung von Benzin durch einen mit seiner Einspritzachse etwa senkrecht zur Zündeinrichtung gelegenen Kraftstoffinjektor. Der gemäß dem Oberbegriff des Anspruches 1 ausgebildete Kraftstoffinjektor weist konvergierende Austrittskanäle auf, so dass die hiervon ausgesendeten Kraftstoffstrahlen auf ihrem Weg in die Brennkammer miteinander kollidieren. Die Größe der runden bzw. leicht ovalen Querschnitte der Austrittskanäle soll stark unterschiedlich sein, um über Resonanzeffekte eine Atomisierung der Kraftstoffstrahlen zu unterstützen.

Des Weiteren ist aus der US 4 699 323 ein Kraftstoffinjektor für die Einspritzung von Kraftstoff in den Ansaugkrümmer einer Brennkraftmaschine bekannt, welcher mehrere Austrittskanäle aufweist, die so ausgerichtet sind, daß diese die austretenden Kraftstoffstrahlen in zwei separate Richtungen entsprechend zwei verschiedenen Einlaßventilen eines Zylinders richten. Dabei kann es zu einer teilweisen Kollision der aus zwei verschiedenen Austrittskanälen austretenden Kraftstoffstrahlen kommen.

Die DE 196 42 513 A1 offenbart einen Kraftstoffinjektor mit den Merkmalen des Oberbegriffes des Anspruches 1, dessen Austrittskanäle auch symmetrisch zu einer Symmetrieebene sind. Dieser Kraftstoffinjektor ist aber von einem anderen Typ als der gattungsgemäße und der erfindungsgemäße Injektor, da er kein zündfähiges Kraftstoff-Luft-Gemisch in der Nähe der Zündkerze durch Kollision von Kraftstoffstrahlen miteinander erzeugt.

Ein weiterer Kraftstoffinjector ist aus der US 6 045 063 bekannt.

Vor diesem Hintergrund war es Aufgabe der vorliegenden Erfindung, Mittel für die Direkteinspritzung von Kraftstoff in die Brennkammer einer Brennkraftmaschine bereitzustellen, mit denen bei hoher Effizienz der Kraftstoffausnutzung ein zündfähiges Kraftstoff-Luft-Gemisch in der Nähe der Zündeinrichtung erzeugt werden kann, ohne daß an der Zündeinrichtung oder am Kraftstoffinjektor Funktionsstörungen durch Ablagerungen auftreten.

Diese Aufgabe wird durch einen Kraftstoffinjektor mit den Merkmalen des Anspruches 1 und durch eine Brennkraftmaschine mit den Merkmalen des Anspruches 2 gelöst.

Vorteilhafte Ausgestaltungen sind in den Unteransprüchen enthalten.

Der nicht erfindungsgemäße Kraftstoffinjektor für die Direkteinspritzung von Kraftstoff in die Brennkammer einer Brennkraftmaschine enthält mehrere Austrittskanäle für Kraftstoff. Der Kraftstoffinjektor ist dadurch gekennzeichnet, daß alle seine Austrittskanäle derart ausgerichtet sind, daß alle hieraus austretenden Kraftstoffstrahlen miteinander kollidieren.

Die Kollision der Kraftstoffstrahlen ist demnach vollständig in dem Sinne, daß es keine Bewegungsbahn eines Kraftstoffteilchens in einem Kraftstoffstrahl gibt, die sich nicht mit der Bewegungsbahn eines Kraftstoffteilchens aus einem anderen Kraftstoffstrahl schneiden würde. Jedes Kraftstoffteilchen beziehungsweise jedes Kraftstofftröpfchen trifft daher nach seinem Eintreten in die Brennkammer irgendwann auf ein Kraftstoffteilchen/Kraftstofftröpfchen aus einem anderen Austrittskanal. Bei der dann stattfindenden Kollision kommt es zu einer abrupten Änderung der Bewegungsrichtung der Kraftstoffteilchen mit einer (teilweisen) Annullierung von Bewegungsimpulsen, sowie zu einer Verteilung und Vernebelung des Kraftstoffes am Ort der Kollision. Ein Vorteil eines Injektors liegt somit darin, daß der Kraftstoff zunächst strahlgeführt über eine größere Strecke transportiert werden kann, um dann am Kollisionspunkt zweier Kraftstoffstrahlen in einen fein verteilten, fast stationären Nebel aufgelöst zu werden.

Der Stand der Technik betrifft weiterhin eine Brennkraftmaschine mit Direkteinspritzung und mit einer Brennkammer, in welcher eine Zündeinrichtung (z. B. eine Zündkerze) und mindestens ein Kraftstoffinjektor sowie mindestens zwei Austrittskanäle für Kraftstoff angeordnet sind. Die Brennkraftmaschine ist dadurch gekennzeichnet, daß die Austrittskanäle des Kraftstoffinjektors bzw. der Kraftstoffinjektoren derart angeordnet und ausgestaltet sind, daß von ihnen in Richtung der Zündeinrichtung ausgesandte Kraftstoffstrahlen vor der Zündeinrichtung - d.h. im Raum zwischen dem Kraftstoffinjektor und der Zündeinrichtung - miteinander kollidieren. Insbesondere kann es sich bei dem Kraftstoffinjektor um einen solchen der vorstehend erläuterten Art handeln, bei dem die Strahlen aus allen Austrittskanälen miteinander kollidieren. Erforderlich ist indes nur, daß eine Kollision der auf die Zündeinrichtung gerichteten Strahlen stattfindet, während in andere Richtungen austretende Kraftstoffstrahlen gegebenenfalls ihren Weg frei, d. h. ohne Kollisionen, fortsetzen können.

Die beschriebene Brennkraftmaschine hat den bereits erläuterten Vorteil, daß der Kraftstoff strahlgeleitet in die Nähe der Zündeinrichtung transportiert wird, wo dann durch die stattfindende Kollision die weitere Bewegung unterbrochen und der Kraftstoff vernebelt wird. Auf diese Weise kann an der Zündeinrichtung ein zündfähiges Kraftstoff-Luft-Gemisch erzeugt werden, ohne daß die Zündeinrichtung direkt von flüssigem Kraftstoff getroffen wird. Es bilden sich daher nur geringfügige Ablagerungen an der Zündeinrichtung, so daß deren Funktion für lange Zeiträume gewährleistet ist.

Weiterhin weist der Kraftstoffinjektor vorzugsweise genau zwei verschiedene Austrittskanäle auf. Mit zwei Kanälen kann die gewünschte Kollision von verschiedenen Kraftstoffstrahlen bewirkt werden, ohne daß die Querschnittsgröße der einzelnen Austrittskanäle, welche durch die gesamte zu injizierende Kraftstoffmenge bestimmt wird, zu klein würde. Die Gefahr, daß sich die Austrittskanäle durch Ablagerungen von Verbrennungsresten zusetzen, ist daher minimal.

Gemäß einer anderen Weiterbildung der Kraftstoffinjektoren weisen deren Austrittskanäle längliche Austrittsöffnungen auf. Zum Beispiel können die Austrittsöffnungen rechteckig sein, wobei die längere Rechteckseite um ein Vielfaches länger ist als die kürzere. Vermöge der länglichen Querschnittsform lassen sich breit gefächerte Kraftstoffstrahlen erzeugen, so daß der Kraftstoff bereits in einer Dimension verteilt ist, ohne daß sein schneller und kompakter Transport in Richtung der Zündeinrichtung hierdurch beeinträchtigt wird.

Bei der vorstehend beschriebenen länglichen Querschnittsform der Austrittskanäle liegen die Längsachsen der Querschnitte der Austrittskanäle vorzugsweise parallel zueinander. Beim Aufeinandertreffen der zugehörigen Kraftstoffstrahlen kommt es somit zu einer über die gesamte Breite der Strahlen stattfindenden Kollision mit großer Toleranz gegenüber Schwankungen der Strahlausrichtung.

Erfindungsgemäss sind die Austrittskanäle des Kraftstoffinjektors symmetrisch zu einer Mittel- oder Symmetrieebene angeordnet und ausgestaltet sind. Dies führt dazu, daß keine Seite der Symmetrieebene durch die Konstruktion des Kraftstoffinjektors bevorzugt wird, so daß auch die beim Aufeinandertreffen der Kraftstoffstrahlen erzeugte Kraftstoffwolke im Wesentlichen symmetrisch ist. Weiterhin heben sich die senkrecht zur Symmetrieebene liegenden Impulskomponenten der Kraftstoffteilchen im Wesentlichen gegenseitig auf, da diese gleich groß, aber entgegengesetzt gerichtet sind.

So können beispielsweise die Austrittskanäle so ausgestaltet beziehungsweise ausgerichtet sein, daß ihre in die Brennkammer hinein verlängerten Achsen ("Verlängerungsachsen"), entlang derer sich die ausgesandten Kraftstoffstrahlen bewegen, die Zündeinrichtung nicht schneiden. Die die Austrittskanäle verlassenden Kraftstoffstrahlen würden daher die Zündeinrichtung auch dann nicht direkt treffen, wenn diese nicht vor der Zündeinrichtung mit anderen Kraftstoffstrahlen kollidieren würden. Hierdurch wird einerseits sichergestellt, daß auch bei dem Ausfall eines Austrittskanals (z. B. durch Verstopfung) keine direkte Benetzung der Zündeinrichtung mit flüssigem Kraftstoff durch den verbleibenden Kraftstoffstrahl eintritt, und daß ferner Kraftstoffteilchen, deren Impuls bei der Kollision mit einem anderen Kraftstoffstrahl wenig beeinflußt wurde, auf ihrem fortgesetzten Weg nicht direkt auf die Zündeinrichtung gelangen.

Die Kraftstoffinjektoren können in an sich bekannter Weise ein linear in Richtung der konstruktiven Längsachse der Kraftstoffinjektoren bewegliches Ventilelement aufweisen, durch dessen Bewegung der Kraftstoffstrom in seiner Größe gesteuert beziehungsweise unterbrochen oder freigegeben werden kann. Die Austrittskanäle der Kraftstoffinjektoren sind gemäß einer ersten Ausgestaltung im Wesentlichen senkrecht zur genannten Längsachse des Kraftstoffinjektors (d. h. zur Bewegungsachse des Ventilelementes) ausgerichtet sein. Ein solcher Kraftstoffinjektor kann mit seiner Längsachse in etwa parallel zur Zündeinrichtung in die Brennkammer eingesetzt werden, wobei die Kraftstoffstrahlen seitlich des Kraftstoffinjektors austreten. Gemäß einer zweiten Ausgestaltung sind die Austrittskanäle dagegen im Wesentlichen in Richtung der Längsachse des Kraftstoffinjektors ausgerichtet. Die Kraftstoffstrahlen verlaufen daher im Wesentlichen in Richtung der verlängerten Längsachse des Kraftstoffinjektors. Diese Bauart erweist sich als vorteilhaft, wenn der Kraftstoffinjektor in einer Position in die Brennkammer eingebaut ist, in welcher seine Längsachse in etwa auf die Zündeinrichtung ausgerichtet ist.

Der Stand der Technik betrifft ferner ein Verfahren zur Direkteinspritzung von Kraftstoff in die Brennkammer einer Brennkraftmaschine, wobei Kraftstoffstrahlen auf eine Zündeinrichtung in der Brennkammer gerichtet werden. Das Verfahren ist dadurch gekennzeichnet, daß die genannten Kraftstoffstrahlen, die sich in Richtung der Zündeinrichtung bewegen, vor der Zündeinrichtung miteinander kollidieren. Wie bereits oben erläutert wurde, hat eine derartige Kollision den Vorteil, im Bereich der Zündeinrichtung einen nahezu stationären Kraftstoffnebel zu erzeugen, ohne die Zündeinrichtung zu benetzen. Das Verfahren beinhaltet dabei die Möglichkeit, daß nicht zur Zündeinrichtung gerichtete Kraftstoffstrahlen ihren Weg ohne Kollision mit anderen Kraftstoffstrahlen nehmen können.

Im Folgenden wird die Erfindung mit Hilfe der Figuren beispielhaft näher erläutert. Es zeigen:
- Fig. 1: eine seitliche Schnittansicht durch den Kopf einer Brennkammer mit einem Kraftstoffinjektor gemäß einer ersten Ausgestaltung der Erfindung;
- Fig. 2: einen Schnitt durch den Kraftstoffinjektor von Figur 1 entlang der Linie II-II;
- Fig. 3: eine Ansicht auf den Kraftstoffinjektor von Figur 2 aus der Richtung III;
- Fig. 4: eine seitliche Schnittansicht durch den Kopf einer Brennkammer mit einem Kraftstoffinjektor gemäß einer zweiten Ausgestaltung der Erfindung;
- Fig. 5: einen Schnitt durch den Kraftstoffinjektor von Figur 4 entlang der Linie V-V von Figur 6, und
- Fig. 6: eine Ansicht auf den Kraftstoffinjektor von Figur 4 aus der Richtung VI.

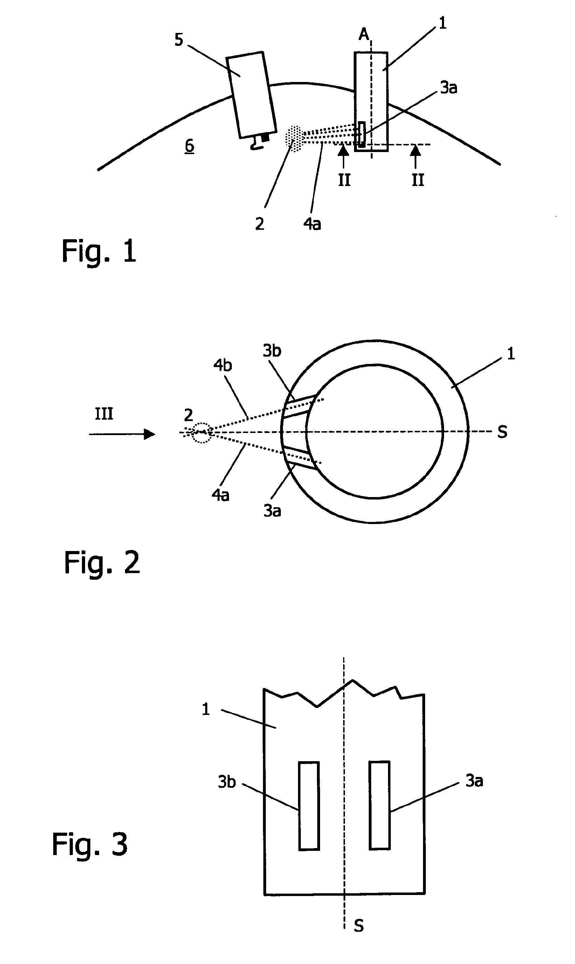

In den Figuren 1 bis 3 ist eine erste Ausgestaltung eines erfindungsgemäßen Kraftstoffinjektors 1 für die Direkteinspritzung von Kraftstoff in die Brennkammer 6 einer Brennkraftmaschine dargestellt. Der Kraftstoffinjektor 1 ist dabei mit seiner Längsachse A im Wesentlichen senkrecht zum Dach der Brennkammer 6 sowie im Wesentlichen parallel zu einer Zündkerze 5 angeordnet.

Wie ferner aus dem Schnitt durch den Kraftstoffinjektor 1 entlang der Linie II-II (Figur 2) sowie der Seitenansicht des Kraftstoffinjektors 1 aus der Richtung III (Figur 3) erkennbar ist, weist der Kraftstoffinjektor 1 seitlich zwei Austrittskanäle 3a, 3b mit einem länglich-rechteckigen Querschnitt auf. Die längliche Form der Austrittskanäle 3a, 3b führt dazu, daß die hieraus austretenden Kraftstoffstrahlen fächerförmig aufgeweitet werden. Die Austrittskanäle 3a, 3b sind ferner symmetrisch zu einer durch den Kraftstoffinjektor verlaufenden Mittelebene S ausgebildet.

Die Besonderheit der Austrittskanäle 3a, 3b besteht darin, daß ihre Verlängerungsachsen außerhalb des Kraftstoffinjektors 1 konvergieren, so daß sich aus den Kanälen 3a, 3b austretende Kraftstoffstrahlen 4a, 4b in einem Kollisionspunkt 2 beziehungsweise genauer gesagt entlang einer Kollisionslinie 2 (senkrecht zur Zeichenebene in Figur 2) treffen. Diese Kollisionslinie 2 wird dabei in die Nähe der Elektroden der Zündkerze 5 gelegt. Die Kollision der Kraftstoffstrahlen 4a, 4b hat zur Folge, daß der Kraftstoff einerseits in seiner Fortbewegung gehemmt wird und daß andererseits am Ort der Kollision ein feiner Kraftstoffnebel entsteht. Auf diese Weise wird in unmittelbarer Nähe der Elektroden der Zündkerze 5 ein zündfähiges Kraftstoff-Luft-Gemisch erzeugt, ohne daß die Elektroden direkt von flüssigem Kraftstoff getroffen würden und daher die Gefahr einer Funktionsstörung durch Ablagerungen entstünde.

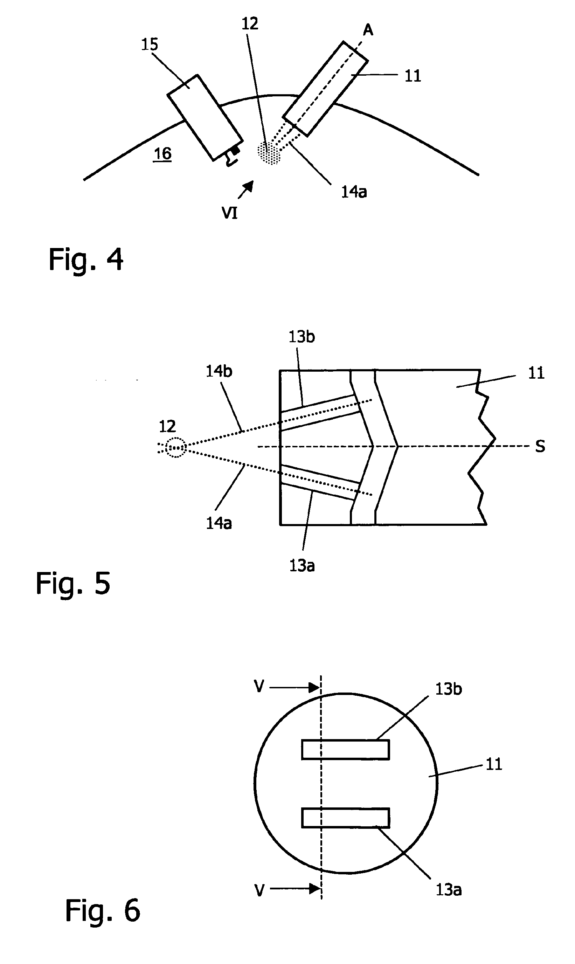

In den Figuren 4 bis 6 ist eine zweite Ausgestaltungsform eines Kraftstoffinjektors 11 zur Direkteinspritzung in eine Brennkammer 16 dargestellt. In den Figuren 1-6 identische oder ähnliche Teile sind dabei mit in der letzten Ziffer übereinstimmenden Bezugszeichen versehen.

Der Unterschied zu der Ausgestaltung nach den Figuren 1-3 besteht darin, daß der Kraftstoffinjektor 11 mit seiner Achse A im Wesentlichen senkrecht zur Zündkerze 15 angeordnet ist. Damit die aus dem Kraftstoffinjektor 11 austretenden Kraftstoffstrahlen 14a, 14b in Richtung der Zündeinrichtung 15 gelangen, enden die zwei Austrittskanäle 13a, 13b des Kraftstoffinjektors 11 an dessen Unterseite, welche in Figur 6 separat dargestellt ist. Aus Figur 6 ist ferner erkennbar, daß die Austrittskanäle einen länglich-rechteckigen Querschnitt haben.

In Figur 5 ist in einer Schnittansicht durch den Kraftstoffinjektor 11 entlang der Linie V-V (Figur 6) erkennbar, daß die Austrittskanäle 13a, 13b zu einer Mittelebene S symmetrisch sind und so verlaufen, daß ihre Verlängerungsachsen sich in einem Kollisionspunkt beziehungsweise einer Kollisionslinie 12 treffen. Die Kollisionslinie 12 wird wieder in die Nähe der Elektroden der Zündeinrichtung 15 gelegt, so daß dort ein fein vernebeltes, zündfähiges Kraftstoff-Luft-Gemisch entsteht, ohne daß die Elektroden selbst direkt getroffen werden.

Die beispielhaft dargestellten Konstruktionen können auf verschiedene Weise abgewandelt werden. Insbesondere können die Kraftstoffinjektoren mehr als zwei Austrittskanäle haben, oder es können pro Brennkammer mehrere Kraftstoffinjektoren mit aufeinander zu gerichteten Kraftstoffstrahlen vorgesehen sein.

## Patentansprüche

1. Kraftstoffinjektor (1, 11) für die Direkteinspritzung von Kraftstoff in die Brennkammer (6, 16) einer Brennkraftmaschine, enthaltend mindestens zwei Austrittskanäle (3a, 3b, 13a, 13b) für Kraftstoff, die derart ausgerichtet sind, daß alle hieraus austretenden Kraftstoffstrahlen (4a, 4b, 14a, 14b) miteinander kollidieren, wobei der Kraftstoffinjektor (1, 11) ein in Richtung seiner Längsachse (A) linear bewegliches Ventilelement aufweist, **dadurch gekennzeichnet, dass**
die Austrittskanäle (3a, 3b, 13a, 13b)
- im Querschnitt längliche Austrittsöffnungen aufweisen, wobei die Längsachsen der Querschnitte der Austrittskanäle (3a, 3b, 13a, 13b) parallel zueinander liegen,
- symmetrisch zu einer Symmetrieebene (S) sind, und
- im Wesentlichen senkrecht von der Längsachse (A) des Kraftstoffinjektors wegweisend ausgerichtet sind.

2. Brennkraftmaschine mit Direkteinspritzung, enthaltend eine Brennkammer (6, 16), in welcher eine Zündeinrichtung (5, 15) und mindestens ein Kraftstoffinjektor (1, 11) angeordnet sind, wobei mindestens zwei Austrittskanäle (3a, 3b, 13a, 13b) für Kraftstoff vorgesehen sind und die Austrittskanäle (3a, 3b, 13a, 13b) derart angeordnet sind, dass von ihnen in Richtung der Zündeinrichtung (5, 15) ausgesandte Kraftstoffstrahlen (4a, 4b, 14a, 14b) vor der Zündeinrichtung miteinander kollidieren,
**dadurch gekennzeichnet, dass**
die Austrittskanäle (3a, 3b, 13a, 13b)
- im Querschnitt längliche Austrittsöffnungen aufweisen, wobei die Längsachsen der Querschnitte der Austrittskanäle (3a, 3b, 13a, 13b) parallel zueinander liegen, und
- symmetrisch zu einer Symmetrieebene (S) sind.

3. Brennkraftmaschine nach Anspruch 2,
**dadurch gekennzeichnet, dass**
die Verlängerungsachsen der Austrittskanäle (3a, 3b, 13a, 13b) die Zündeinrichtung (5, 15) nicht schneiden.

4. Kraftstoffinjektor beziehungsweise Brennkraftmaschine nach mindestens
einem der vorhergehenden Ansprüche,
**dadurch gekennzeichnet, dass**
der Kraftstoffinjektor (1, 11) zwei Austrittskanäle (3a, 3b, 13a, 13b) aufweist.

5. Brennkraftmaschine nach mindestens einem der Ansprüche 2 bis 4,
**dadurch gekennzeichnet, dass**
der Kraftstoffinjektor (1, 11) ein in Richtung seiner Längsachse (A) linear bewegliches Ventilelement aufweist, und dass die Austrittskanäle (3a, 3b, 13a, 13b) im Wesentlichen senkrecht zur genannten Längsachse ausgerichtet sind.

6. Brennkraftmaschine nach mindestens einem der Ansprüche 2 bis 4,
**dadurch gekennzeichnet, dass**
der Kraftstoffinjektor (1, 11) ein in Richtung seiner Längsachse (A) linear bewegliches Ventilelement aufweist, und dass die Austrittskanäle (3a, 3b, 13a, 13b) im Wesentlichen in Richtung der genannten Längsachse ausgerichtet sind.

## Claims

1. Fuel injector (1, 11) for the direct injection of fuel into the combustion chamber (6, 16) of an internal combustion engine, comprising at least two outlet ducts (3a, 3b, 13a, 13b) for fuel, which are aligned in such a way that all the fuel jets (4a, 4b, 14a, 14b) emerging from them collide with one another, the fuel injector (1, 11) having a valve element which can be moved linearly in the direction of its longitudinal axis (A), **characterized in that**
the outlet ducts (3a, 3b, 13a, 13b)
- have outlet openings of elongate cross section, the longitudinal axes of the cross sections of the outlet ducts (3a, 3b, 13a, 13b) lying parallel to one another,
- are symmetrical with respect to a plane of symmetry (S), and
- are oriented so as to point substantially perpendicularly away from the longitudinal axis (A) of the fuel injector

2. Internal combustion engine with direct injection, comprising a combustion chamber (6, 16), in which an ignition device (5, 15) and at least one fuel injector (1, 11) are arranged, at least two outlet ducts (3a, 3b, 13a, 13b) for fuel being provided, and the outlet ducts (3a, 3b, 13a, 13b) are arranged in such a way that fuel jets (4a, 4b, 14a, 14b) sent out from them in the direction of the ignition device (5, 15) collide with one another in front of the ignition device,
**characterized in that**
the outlet ducts (3a, 3b, 13a, 13b)
- have outlet openings of elongate cross section, the longitudinal axes of the cross sections of the outlet ducts (3a, 3b, 13a, 13b) lying parallel to one another, and
- are symmetrical with respect to a plane of symmetry (S).

3. Internal combustion engine according to Claim 2,
**characterized in that**
the axes of extension of the outlet ducts (3a, 3b, 13a, 13b) do not intersect the ignition device (5, 15) .

4. Fuel injector or internal combustion engine according to at least one of the preceding claims,
**characterized in that**
the fuel injector (1, 11) has two outlet ducts (3a, 3b, 13a, 13b).

5. Internal combustion engine according to at least one of Claims 2 to 4,
**characterized in that**
the fuel injector (1, 11) has a valve element which can be moved linearly in the direction of its longitudinal axis (A), and **characterized in that** the outlet ducts (3a, 3b, 13a, 13b) are aligned substantially perpendicularly to said longitudinal axis.

6. Internal combustion engine according to at least one of Claims 2 to 4,
**characterized in that**
the fuel injector (1, 11) has a valve element which can be moved linearly in the direction of its longitudinal axis (A), and **characterized in that** the outlet ducts (3a, 3b, 13a, 13b) are aligned substantially in the direction of said longitudinal axis.

## Revendications

1. Injecteur de carburant (1, 11) pour l'injection directe de carburant dans la chambre de combustion (6, 16) d'un moteur à combustion interne, contenant au moins deux canaux de sortie (3a, 3b, 13a, 13b) pour du carburant, lesquels sont orientés de telle sorte que tous les jets de carburant en sortant (4a, 4b, 14a, 14b) convergent les uns dans les autres, l'injecteur de carburant (1, 11) présentant un élément de soupape déplaçable linéairement dans la direction de son axe longitudinal (A),
**caractérisé en ce que**
les canaux de sortie (3a, 3b, 13a, 13b)
- présentent, en section transversale, des ouvertures de sortie allongées, les axes longitudinaux des sections transversales des canaux de sortie (3a, 3b, 13a, 13b) s'étendant parallèlement les uns aux autres,
- sont symétriques par rapport à un plan de symétrie (S), et
- sont orientés en s'écartant essentiellement perpendiculairement de l'axe longitudinal (A) de l'injecteur de carburant.

2. Moteur à combustion interne à injection directe, contenant une chambre de combustion (6, 16) dans laquelle sont disposés un dispositif d'allumage (5, 15) et au moins un injecteur de carburant (1, 11), au moins deux canaux de sortie (3a, 3b, 13a, 13b) étant prévus pour le carburant, et les canaux de sortie (3a, 3b, 13a, 13b) étant disposés de telle sorte que des jets de carburant (4a, 4b, 14a, 14b) émis depuis ceux-ci dans la direction du dispositif d'allumage (5, 15) convergent les uns dans les autres avant le dispositif d'allumage,
**caractérisé en ce que**
les canaux de sortie (3a, 3b, 13a, 13b)
- présentent des ouvertures de sortie allongées en coupe transversale, les axes longitudinaux des sections transversales des canaux de sortie (3a, 3b, 13a, 13b) s'étendant parallèlement les uns aux autres, et
- étant symétriques par rapport à un plan de symétrie (S).

3. Moteur à combustion interne selon la revendication 2,
**caractérisé en ce que**
les axes de prolongement des canaux de sortie (3a, 3b, 13a, 13b) ne coupent pas le dispositif d'allumage (5, 15).

4. Injecteur de carburant, ou moteur à combustion interne selon au moins l'une quelconque des revendications précédentes,
**caractérisé en ce que**
l'injecteur de carburant (1, 11) présente deux canaux de sortie (3a, 3b, 13a, 13b).

5. Moteur à combustion interne selon au moins l'une quelconque des revendications 2 à 4,
**caractérisé en ce que**
l'injecteur de carburant (1, 11) présente un élément de soupape déplaçable linéairement dans la direction de son axe longitudinal (A), et **en ce que** les canaux de sortie (3a, 3b, 13a, 13b) sont orientés essentiellement perpendiculairement audit axe longitudinal.

6. Moteur à combustion interne selon au moins l'une quelconque des revendications 2 à 4,
**caractérisé en ce que**
l'injecteur de carburant (1, 11) présente un élément de soupape déplaçable linéairement dans la direction de son axe longitudinal (A), et **en ce que** les canaux de sortie (3a, 3b, 13a, 13b) sont orientés essentiellement dans la direction dudit axe longitudinal.
